# EUROPEAN PATENT SPECIFICATION

(11) **EP 3 004 913 B1**
(45) Date of publication and mention of the grant of the patent: **14.08.2019**
(21) Application number: 14716036.0
(22) Date of filing: 21.03.2014
(51) Int. Cl.: G01S 19/09, G01S 19/14, G01S 19/21

(54) **METHOD AND SYSTEM FOR RETRIEVING LOCATION DATA OF AN OBJECT OVER TIME USING A GNSS RECEIVER FOR ANTI-SPOOFING, AND SIGNALS-IN-SPACE RECEIVER AND READER FOR SUCH METHOD AND SYSTEM**
VERFAHREN UND SYSTEM ZUM ABRUF VON POSITIONSDATEN EINES OBJEKTS IM LAUFE DER ZEIT MIT EINEM GNSS-EMPFÄNGER FÜR ANTI-SPOOFING UND SIGNALE-IM-RAUM-EMPFÄNGER SOWIE LESEVORRICHTUNG FÜR EIN DERARTIGES VERFAHREN UND SYSTEM
PROCÉDÉ ET SYSTÈME PERMETTANT DE RÉCUPÉRER DES DONNÉES DE LOCALISATION D'UN OBJET AU COURS DU TEMPS AU MOYEN D'UN RÉCEPTEUR GNSS À DES FINS D'ANTI-MYSTIFICATION, ET RÉCEPTEUR ET LECTEUR DE SIGNAUX DANS L'ESPACE POUR CE PROCÉDÉ ET CE SYSTÈME

(30) Priority: 29.05.2013 NL 2010886
(43) Date of publication of application: 13.04.2016
(73) Proprietor: Folkers, Willem, 1933 Sterrebeek (BE)
(72) Inventor: Folkers, Willem, 1933 Sterrebeek (BE)
(74) Representative: EP&C
(86) International application number: PCT/NL2014/050179
(87) International publication number: WO 2014/193221

(56) References cited:
- EP-A1- 0 508 405
- EP-A2- 0 444 738
- WO-A1-2004/092765
- WO-A1-2008/068702
- WO-A1-2012/007720

## Description

The invention relates to a method for reducing a risk of tampering and/or spoofing of location data of an object over time. The invention further relates to use of a signals-in-space receiver and reader in such a method.

When objects are transported, in particular where the object is a vessel or a container, it is often desired to know the trajectory of the object, i.e. where the object was located in a certain time span. The trajectory is therefore the location of such an object over time, e.g. multiple locations over time. For example, a governmental entity wants to make sure that a vessel, such as a ship, does not enter a certain region. A fishing ship is, for example, only allowed to fish in a certain region.

It is known that such fishing ships are provided with GPS receivers that store location data over time in the GPS receiver. When such a ship enters a harbour, location data stored in the GPS receiver is checked and compared with the predefined prohibited region. Location data for example is comprised of several positions for several points in time. The positions may for example be expressed in longitude and latitude.

A drawback of this known method and system is that such GPS receivers can be easily spoofed and/or tampered with. That is, the location data stored in the GPS receiver can be tampered and/or spoofed with and changed, such that it appears that the fishing ship has been on a location in a certain time span that is different with the actual locations where the fishing ship has been.

A further drawback is that such GPS receivers need to process received signals and store the location data in a memory unit which requires power.

WO 2012/007720 A1 discloses a mechanism for verifying at a remote location, a geolocation determination made at a receiver, by taking advantage of elements of location signals received at that receiver not detectable or alternatively decodable by the receiver. The elements are at least detectable by verification means at the remote location and from which a location determination of the receiver can be verified.

It is an object of the invention to provide a method which at least partly eliminates the above mentioned drawbacks or in any case to provide an alternative.

In particular, the objective of the invention is to provide a method for retrieving location data of an object over time in which the risk of unwanted spoofing is reduced.

This object is achieved by the invention by means of a method according to claim 1.

In a first aspect of the present invention, a method for reducing a risk of tampering and/or spoofing of location data of an object over time is provided. Location data is representative for at least a position of the object over time, but may also be representative for velocity and time of the object. In particular, the location data is representative for so-called Position, Velocity, Time (PVT).

The method comprises the step of providing a signals-in-space receiver to the object.

The signals-in-space receiver comprises an antenna for receiving an encrypted navigation signal and an A/D converter for discretizing the encrypted navigation signal.

The antenna receives encrypted navigation signals originated from one or more Global Navigation Satellite System (GNSS) satellites and/or space-based navigation satellites. Examples of such satellites that originate signals-in-space are the Global Positioning System (GPS), Galileo, Globalnaya Navigatsionnaya Sputnikovaya Sistema (GLONASS) and/or BeiDou Navigation Satellite System (BDS).

The navigation signal originated from the space-based navigation satellite is encrypted. That is, without knowing a decryption key or algorithm, the navigation signal cannot be used for retrieving location data.

For example, the Galileo positioning system provides two encrypted services, being the Commercial Navigation Service (CNS) and the Public Regulated Navigation Service (PRS). Both services correspond with an encrypted navigation signal originating from a Galileo satellite. These are respectively a CNS navigation signal and a PRS navigation signal. Upon paying a fee the CNS navigation signal can be decrypted. The PRS service shall be mainly used by governmental entities. For example, the decryption keys are only available with consent of the governmental entities.

The receiver is therefore adapted for receiving encrypted navigation signals from space and discretizing these into encrypted navigation data. In particular the receiver is adapted for receiving, by the antenna, all encrypted navigation signals that are in view of the antenna. The discretizing, i.e. converting the analogue encrypted navigation signal to digital encrypted navigation data is provided by the A/D converter.

The antenna is designed to receive a particular signal-in-space, e.g. one or more encrypted navigation signals at the same time. In other words, the antenna is designed to receive all particular signals-in-space, e.g. all particular encrypted navigation signals, that are in view of the antenna. For example, in case of the Galileo satellite system, four or more Galileo satellites are in view of the antenna and each of the Galileo satellites is transmitting a PRS navigation signal. All those PRS navigation signals, corresponding with and originating from these Galileo satellites in view, are received by the antenna at the same time and discretized, e.g. converted, by the A/D converter into encrypted navigation data.

The A/D converter is therefore adapted to discretize the one or more received encrypted navigation signals into encrypted navigation data.

Preferably, the A/D converter converts the analogue encrypted navigation signal with a predefined sample rate into digital encrypted navigation data. The sample rate depends on an expected and/or desired duration of time during which the location data of the object must be logged, i.e. the expected and/or desired logging time. In case the expected and/or desired logging time is relatively large, in contrast, the sampling rate is relative low. In case the expected and/or desired logging time is relatively low, in contrast, the sampling rate is relatively high.

For example, when the object has a logging time of one month, the sampling rate may for example be one sample, or series of samples, per day.

For example, when the object has a logging time of one week, the sampling rate may for example be one sample, or series of samples, each hour.

In particular, the sampling rate also depends on the size, i.e. available storage, of the memory unit.

The receiver further comprises a memory unit for storing the encrypted navigation data. The encrypted navigation data comprises data that is representative for one or more, preferably four encrypted navigation signals.

The memory unit is a data logger that stores and/or logs the encrypted navigation data over time. When the memory unit is relatively large a high sampling rate may be chosen. When the memory unit is relatively small a low sampling rate may be chosen. Moreover, when the memory unit is relatively large, a relatively large logging time can be implemented. When the memory unit is relatively small, a relatively low logging time can be implemented. A relatively small memory unit is a memory unit with relatively little storage capacity. A relatively large memory unit is a memory unit with relatively large storage capacity.

Preferably, the memory unit stores and/or logs the encrypted navigation signal for a predefined duration, wherein the predefined duration is representative for a duration of which the location data of the object is desired to be known. This may for example be in the order magnitude of days, weeks, months and or years.

The receiver comprises an interface for connecting a reader to the memory unit. The reader is releasable connectable with the receiver by means of the interface.

The method further comprises the step of receiving the encrypted navigation signal over time by the antenna and discretizing the encrypted navigation signal over time by the A/D converter into encrypted navigation data.

The method comprises the step of storing the encrypted navigation signal over time in the memory unit.

The method comprises the step of connecting the reader with the memory unit for transferring the encrypted navigation signal over time from the memory unit to the reader.

The reader may for example be connected to the memory unit by a user of the reader being a representative of a governmental entity. The representative for example wants to check where the object has been and when.

The method comprises the step of decrypting in the reader the encrypted navigation signal over time and retrieving the location data of the object over time.

The advantage of decrypting the encrypted navigation signal over time in the reader is that it is not mandatory for the receiver to decrypt the encrypted navigation signal. The decryption is performed in the reader and not in the receiver. Therefore, the receiver is free from a processing unit that, by means of a decryption key, is configured to decrypt the encrypted signal-in-space. This greatly reduces a risk of tampering and/or spoofing with location data as the receiver does not contain any location data.

In an embodiment, the power provided to the receiver is provided by an external power source and/or an internal power source. The method then comprises the step of providing power to the receiver by means of the power source.

For example, the power source is located externally with respect to the receiver, wherein the power source is located in or near the object.

In another example, the power source is located internally with respect to the receiver.

In a preferred embodiment of the method according to the invention, the antenna is suitable for receiving more than one, preferably more than three encrypted navigation signals at the same time, wherein the A/D converter is suitable for discretizing the received encrypted navigation signals at the same time into encrypted navigation data.

The more than one encrypted navigation signals originate from more than one satellite, i.e. different and several satellites. In particular, these are the GNSS satellites that are in view of the antenna. However, the more than one encrypted navigation signals are received and discretized at the same time into encrypted navigation data. The encrypted navigation data therefore comprises data that is representative for the more than one encrypted navigation signals.

The method further comprises the steps of receiving the encrypted navigation signals over time by the antenna and discretizing the encrypted navigation signals over time by the A/D converter.

This has the advantage that it is more difficult to tamper and/or to spoof with the received more than one encrypted navigation signals. In order to tamper and/or spoof with retrieving location data from the more than one encrypted navigation signals a decryption key is required which is not provided in the receiver. Tampering and/or spoofing of the more than one encrypted navigation signals is much more difficult. The more encrypted navigation signals are discretized and stored as encrypted navigation data in the memory unit the greater may be the reduction of risk for tampering and/or spoofing. It is more difficult to tamper or spoof multiple encrypted navigation signal compared to one encrypted navigation signals.

Therefore, the step of retrieving location data from the encrypted navigation data is performed separately from storing the encrypted navigation data. Not only the steps are performed separately in time, but preferably, the steps are performed in physical separate units. Preferably, the step of receiving, discretizing and storing is performed in the receiver and the step of decrypting and retrieving is performed in the reader. The receiver and the reader are releasable connectable with each other.

In an embodiment the interface of the receiver is configured to transfer encrypted navigation data to the reader wirelessly and/or by means of a wire.

For example, the encrypted navigation data is transferred wirelessly, by means of internet, to the reader. In this case, the reader may for example be also a server. In another example, the encrypted navigation data is transferred by means of wire to the reader. Also in this case, the reader may for example be a server. Alternatively, the reader is a dedicated unit to decrypt the encrypted navigation data and retrieve the location data of the object over time.

In an embodiment of the method according to the invention, the method further comprises the step of providing the reader with a decryption key for decrypting the encrypted navigation data over time.

This is advantageous as the decryption key is provided in the reader and not in the receiver which reduces the risk of tampering and/or spoofing in the receiver. The decryption key is for example provided by a governmental entity when a Public Regulated Service (PRS) signal is stored as encrypted navigation data.

In an embodiment of the method according to the invention, the method further comprises the step of comparing the location data of the object over time with a predefined region.

The reader retrieves the location data over time from the encrypted navigation data stored in the memory unit of the receiver. The location data over time is compared with a predefined region. This is advantageous as it allows a user of the reader, for example a representative of a governmental entity, to retrieve whether an object has been in the predefined region or not.

In a further embodiment of the method according to the invention, the method further comprises the step of comparing the retrieved location data with non-encrypted navigation data.

This non-encrypted navigation data is acquired by receiving non-encrypted navigations signals by the antenna and discretizing these non-encrypted navigation signals by the A/D converter into non-encrypted navigation data.

In an embodiment of the method according to the invention the encrypted navigation signal is an encrypted Global Navigation Satellite System (GNSS) signal.

In an embodiment of the method according to the invention the object is a vessel, preferably a fishing ship. This allows knowing when and where a vessel has been by a user of the reader.

In an embodiment of the method according to the invention the object is a container, preferably on a vessel. This allows knowing when and where a container has been by a user of the reader.

In an embodiment of the method according to the invention the object is a human body. This allows knowing when and where a human body has been by a user of the reader. For example, the user of the reader is a representative of a law enforcement entity and/or administration of justice. The human body for example is a convict who is under house arrest. In this example, this representative can check where the convict has been and where when the representative connects the reader with the receiver and the reader retrieves the location data from the receiver.

In an embodiment of the method according to the invention the object is container on a road truck.

In an embodiment of the method according to the invention the object is any rental vehicle, such as but not limited to a rental car, rental boat, rental bike and/or rental airplane.

This is advantageous as it can be easily checked by an owner of the rental vehicle whether the rental vehicle has been within a certain predefined area at a certain time.

In an embodiment of the method according to the invention the object is any vehicle, such as but not limited to terrestrial vehicles, sea vehicles, air vehicles and/or space vehicles. Further examples are airplanes, helicopters, rockets, ships, vessels, cars, boats, trucks and/or bikes.

In an embodiment of the method according to the invention the encrypted navigation signal is a Public Regulated Service (PRS) signal.

In an embodiment of the method according to the invention the encrypted navigation signal is a Commercial Navigation Service (CNS) signal.

The method comprises the step of transferring the encrypted navigation data over time from the memory unit to the reader.

The method also comprises the step of decrypting in the reader the encrypted navigation data over time and retrieving the location data of the object over time.

This is advantageous as it provides a user of the reader to retrieve location data of the object from the receiver with reduced risk of tampering and/or spoofing. The reader does not receive location data from the receiver, but instead raw encrypted navigation data stored in the memory unit is transferred to the reader. The decryption, that is decrypting the encrypted navigation data is performed in the reader. The decrypted navigation data is subsequently used to retrieve the location data of the object.

In an embodiment of the method according to the invention, the method further comprises steps of providing the signals-in-space receiver to the object, receiving the encrypted navigation signal over time by the antenna, discretizing the encrypted navigation signal over time by the A/D converter into encrypted navigation data and storing the encrypted navigation data over time in the memory unit.

This is advantageous as the storing and acquiring of the encrypted navigation data in the receiver is separately performed from the decrypting of the encrypted navigation data and retrieving of the location data of the object in the reader. This reduces the risk for tampering and/or spoofing. In other words, it makes tampering and spoofing of the location data more difficult.

The receiver comprises an antenna for receiving an encrypted navigation signal, an A/D converter for discretizing the encrypted navigation signal to encrypted navigation data, a memory unit for storing the encrypted navigation data over time and an interface for connecting a reader to the memory unit.

The method comprises the steps of receiving the encrypted navigation signal over time by the antenna and discretizing the encrypted navigation signal over time by the A/D converter into encrypted navigation data.

The method comprises the step of storing the encrypted navigation data over time in the memory unit, wherein the encrypted navigation data over time is representative for the location data of the object over time.

This is advantageous as the receiver logs received encrypted navigation signals over time as encrypted navigation data in the memory unit, without decrypting the navigation signal. Location data is not retrieved or logged in the receiver. Instead, raw encrypted navigation data is stored. This allows the receiver not to decrypt encrypted navigation data and retrieve location data. Therefore, tampering and/or spoofing location data in the receiver is not possible, as no location data is required in the receiver. Tampering and/or spoofing of the encrypted navigation data is much more difficult, such that the risk of tampering and/or spoofing is reduced.

In an embodiment of the method, the method comprises the steps of connecting the reader with the memory unit for transferring the encrypted navigation data over time from the memory unit to the reader and decrypting in the reader the encrypted navigation data over time and retrieving the location data of the object over time.

This is advantageous as the retrieving of the location data is not performed in the receiver but in the reader. The reader is releasable connectable with the receiver, therefore tampering and/or spoofing of the location data is much more difficult when the reader and the receiver are separated.

In a second aspect, the present invention provides a use of a signals-in-space receiver in the method of the invention.

This signals-in-space receiver comprises an antenna for receiving an encrypted navigation signal over time, an A/D converter for discretizing the encrypted navigation signal over time in encrypted navigation data over time, a memory unit for storing the encrypted navigation data over time and an interface for connecting with a reader and transferring the encrypted navigation data over time to the reader.

This is advantageous as in the signals-in-space receiver no decryption of the encrypted navigation data is performed. No location data is retrieved in the receiver. Instead of logging location data in the receiver, raw encrypted navigation data is stored in the memory unit. Hence, no tampering or spoofing of location data is possible as no location data is stored or logged in the receiver.

In a third aspect, the present invention provides a use of a reader in the method of the invention.

This reader relates to retrieving location data of an object over time and comprises an interface for connection with a signals-in-space receiver and transferring encrypted navigation data over time stored in the receiver from the receiver to the reader and a decryption unit configured for decrypting the encrypted navigation data over time and retrieving the location data of the object over time.

A system comprises a signals-in-space receiver, in particular a signals-in-space receiver according to one of the above embodiments.

The receiver comprises an antenna for receiving an encrypted navigation signal over time and an A/D converter for discretizing the encrypted navigation signal over time in encrypted navigation data over time. The receiver comprises a memory unit for storing the encrypted navigation data over time and a reader interface for connecting with a reader and transferring the encrypted navigation data over time to the reader.

The system further comprises the reader, in particular a reader according to one of the above embodiments, for retrieving the location data of the object over time.

The reader comprises a receiver interface for connection with the signals-in-space receiver and transferring the encrypted navigation data over time stored in the receiver from the receiver to the reader. The reader further comprises a decryption unit configured for decrypting the encrypted navigation data over time and retrieving the location data of the object over time.

Advantage of this system is that the reader and the receiver are releasable connectable, such that it allows for performing retrieving location data from encrypted navigation data separately from storing the encrypted navigation data.

This has the advantage that it is more difficult to tamper and/or to spoof with the received more than one encrypted navigation signals. In order to tamper and/or spoof with retrieving location data from the more than one encrypted navigation signals a decryption key is required which is not provided in the receiver. Tampering and/or spoofing of the more than one encrypted navigation signals is much more difficult. The more encrypted navigation signals are discretized and stored as encrypted navigation data in the memory unit the greater may be the reduction of risk for tampering and/or spoofing. It is more difficult to tamper or spoof multiple encrypted navigation signal compared to one encrypted navigation signals.

In a preferred embodiment, the system is designed to perform at least some of the steps of a method of the invention according to one or more of the above embodiments.

These and other aspects of the invention will be more readily appreciated as the same becomes better understood by reference to the following detailed description and considered in connection with the accompanying drawings in which like reference symbols designate like parts.
Figure 1 shows a signals-in-space receiver attached to ship and a reader for the method according to the invention.
Figure 2 shows a detailed overview of the signals-in-space receiver and the reader.
Figure 3 shows a detailed overview of a system.

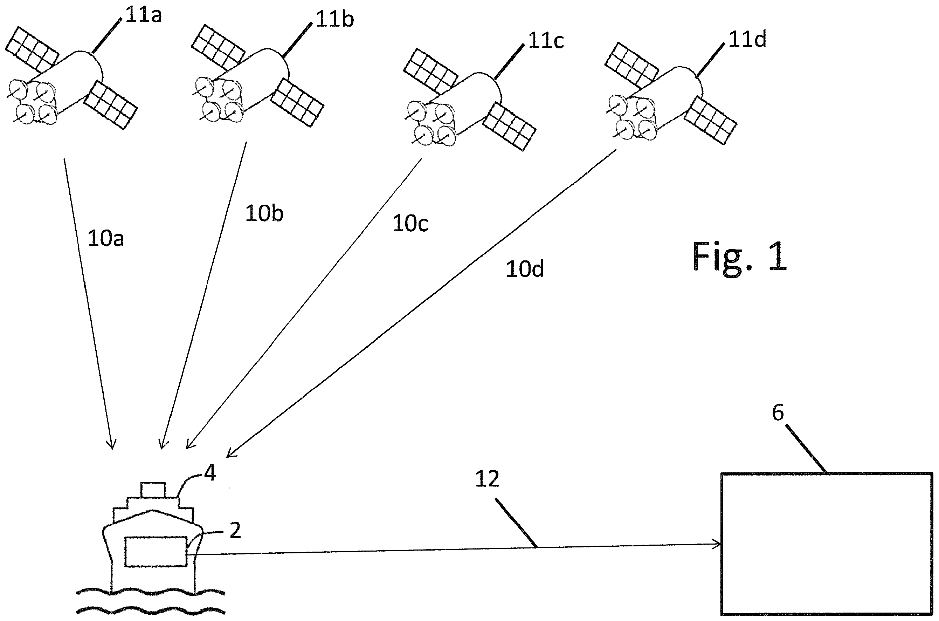

Figure 1 shows a signals-in-space receiver 2 attached to an object 4. The object 4 here is a ship, for example a fishing ship. The receiver 2 is provided to the object 4 such that location data 5 of the receiver 2 corresponds to location data 5 of the object 4. In other words, the object 4 corresponds with certain location data 5, e.g. the ship has a certain position and velocity at a certain time (PVT). As the receiver 2 is attached and/or provided to the object 4, their location data correspond.

Further shown is a reader 6. The reader 6 is suitable to be connected with the receiver 2. For this purpose the receiver is comprised with an interface 7. When the reader 6 is connected, data can be transferred between the receiver 2 and the reader 6. In particular, data is transferred from the receiver 2 to the reader 6. The reader 6 is suitable to retrieve location data 5 that corresponds to the reader 6 and therefore the object 4.

To illustrate the invention, a method for retrieving location data 5 from the object 4 is described in more detail.

A first step is that the signals-in-space receiver 2 is provided or attached to the object 4. For example, this is done by means of magnets or other fastening means. After providing the receiver 2 to the object 4, the location data 5 of the receiver 2 correspond to location data 5 of the object 4 and vice versa.

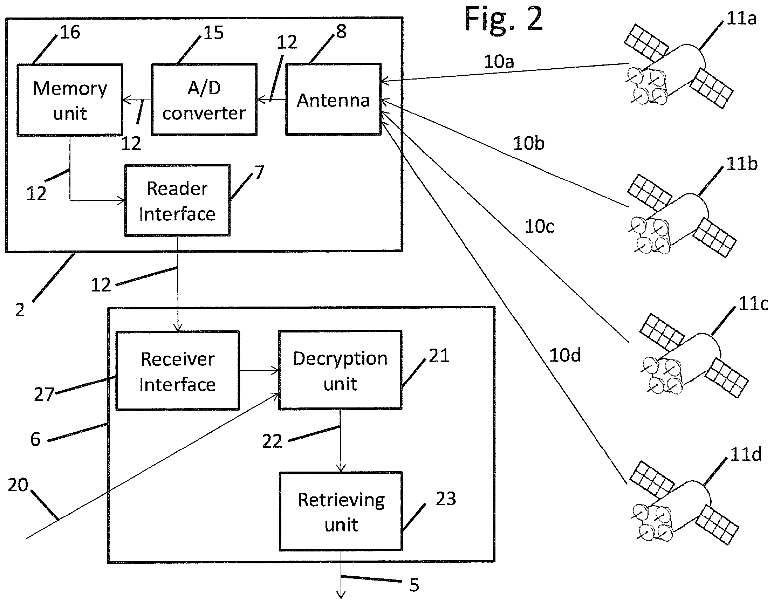

The receiver 2 comprises an antenna 8 for receiving encrypted navigation signals 10a, 10b, 10c, 10d. This can be seen in Figure 2.

The encrypted navigation signals 10a, 10b, 10c, 10d originate from Global Navigation Satellite System (GNSS) satellites. Here, in total four GNSS satellites 11a, 11b, 11c, 11d are in view and each transmit respectively an encrypted navigation signal 10a, 10b, 10c, 10d.

The encrypted navigation signals 10a, 10b, 10c, 10d are received by the antenna 8 at the same time and converted into encrypted navigation data 12 by an A/D converter 15. With converting from analogue navigation signals to digital navigation data is meant discretizing the encrypted navigation signals 10a, 10b, 10c, 10d into encrypted navigation data 12. After discretizing, the encrypted navigation data 12 is suitable for digital processing, such as storing it on a memory unit 16.

The second step of the method is therefore receiving the encrypted navigation signals 10a, 10b, 10c, 10d by the antenna 8. Thereafter, the method comprises the step of discretizing the encrypted navigation signals 10a, 10b, 10c, 10d into encrypted navigation data 12 by the A/D converter 15.

A subsequent step is that the encrypted navigation data 12 is stored in the memory unit 16. The memory unit 16 is comprised in the receiver 2.

For example, the memory unit 16 is a Solid State Drive (SSD) also known as a Solid State Storage and/or Solid State Disk and/or Electronic Disk. These SSD actually do not comprise a disk however are comprised of integrated circuits as memory storage.

In another example, the memory unit 16 is a non-volatile memory card such as a Secure Digital (SD) card.

The receiver 2 now logs all encrypted navigation signals 10a, 10b, 10c, 10d over time and stores it as encrypted navigation data 12 in the memory unit 2.

The storing, i.e. logging, may be performed at a predefined sample rate and for a predefined duration.

For example, after the receiver 2 has been attached to the object 4, e.g. a ship, the object 4 will be at sea for 2 weeks. The receiver 2 discretizes, e.g. samples/records, the encrypted navigation signals 10a, 10b, 10c, 10d for 2 weeks at a sampling rate of two samples per day. In total 14 respectively 28 samples of encrypted navigation data 12 are stored in the memory unit 16.

In general, the sampling rate and duration of sampling depend on the total duration that location data is required and the type of object.

During receiving of the encrypted navigation signals 10a, 10b, 10c, 10d no processing of the encrypted navigation data 12 into actual location data 5 is performed. As the receiver 2 does not comprise a decryption key 20 it is much more difficult to spoof and/or tamper with the receiver in order to generate false location data 5. This reduces the risk for tampering and/or spoofing the receiver 2.

When the object 4, in this case the ship, is back in port, a governmental entity is able to retrieve location data 5 based on the encrypted navigation data 12 stored in the receiver 2.

Therefore, in a further embodiment, the method comprises the step of connecting the reader 6 with the memory unit 16 for transferring the encrypted navigation data 12 over time from the memory unit 16 to the reader 6.

Now, the encrypted navigation data 12 is available to the reader 6.

The subsequent step is decrypting, in the reader 6, the encrypted navigation data 12 over time.

For this purpose, the reader 6 comprises a decryption unit 21 that decrypts the encrypted navigation data 12 into decrypted navigation data 22. The decryption key 20 may inputted into the reader 6 or may already be programmed into the decryption unit 21. For example, the decryption unit 21 is a so-called security module that already comprises the decryption key 20.

The subsequent step is retrieving the location data 5 over time from the decrypted navigation data 22 by the reader 6. Shown in Figure 2 is that the reader 6 comprises a retrieving unit 23 for retrieving the location data 5 from the decrypted navigation data 22.

Separating the step of decrypting encrypted navigation data 12 and retrieving location data 5 from logging/storing the encrypted navigation data 12 has as advantage that spoofing and/or tampering of the location data 5 is much more difficult.

The invention also relates to a use of the signals-in-space receiver 2 as described and shown in Figures 1 and 2.

Here, the signals-in-space receiver 2 comprises the antenna 8 for receiving the encrypted navigation signal 10a, 10b, 10c, 10d over time. It comprises the A/D converter 15 for discretizing the encrypted navigation signal 10a, 10b, 10c, 10d overtime in encrypted navigation data 12 over time. It comprises the memory unit 16 for storing the encrypted navigation data 12 over time. And the receiver 2 comprises the interface 7 for connecting with the reader 6 and transferring the encrypted navigation data 12 over time to the reader 6.

The invention also relates to a use of the reader as described in Figures 1 and 2. The reader comprises an interface, being an receiver interface 27, for connection with the signals-in-space receiver 2 and for transferring encrypted navigation data 12 over time stored in the receiver 2 from the receiver 2 to the reader 6. The receiver 2 comprises an interface 7, being a reader interface, for connecting with the reader 6. Preferably, the receiver interface 27 is releasable connectable with the reader interface 7 for communication between the reader 6 and the receiver 2 respectively.

The reader 6 comprises further the decryption unit 21 configured for decrypting the encrypted navigation data 12 over time. The reader 6 comprises the retrieving unit 23 for retrieving the location data 5 of the object 4 over time.

A method for retrieving location data 5 of the object 4 from the signals-in-space receiver 2, as described in Figures 1 and 2, comprises the steps of connecting the reader 6 with the signals-in-space receiver 2, transferring the encrypted navigation data 12 over time from the memory unit 16 to the reader 6 and decrypting in the reader 6 the encrypted navigation data 12 over time and retrieving the location data 5 of the object 4 over time.

A method for storing location data 5 of the object 4 in the receiver 2, as described in Figures 1 and 2, comprises the steps of providing the signals-in-space receiver 2 to the object 4, receiving the encrypted navigation signal 10a, 10b, 10c, 10d over time by the antenna 8, discretizing the encrypted navigation signal 10a, 10b, 10c, 10d over time by the A/D converter 15 into encrypted navigation data 12 and storing the encrypted navigation data 12 over time in the memory unit 16. The encrypted navigation data 12 over time is hereby representative for the location data 5 of the object 4 over time.

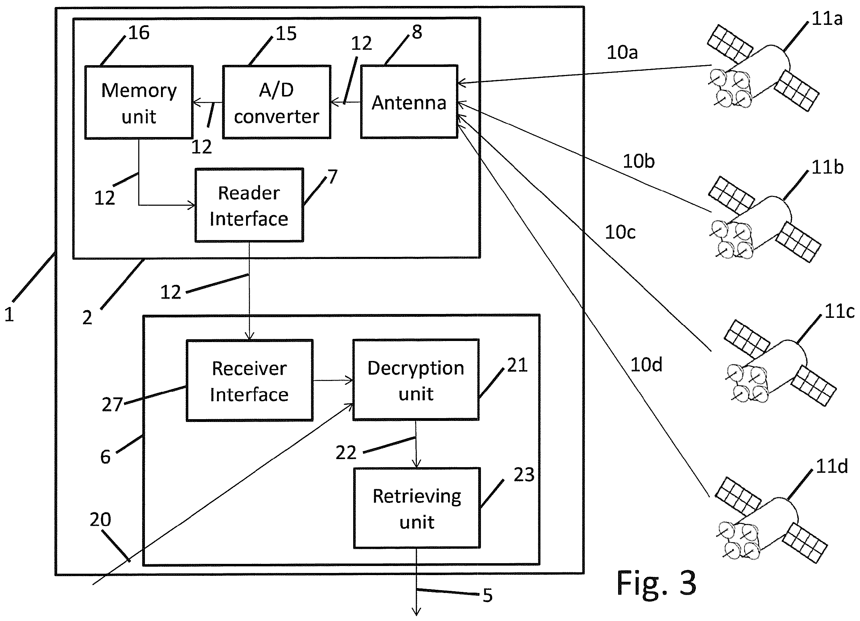

A system 1 for retrieving location data 5 of an object 4, shown in Figure 3, is comprised of the receiver 2 and the reader 6 according to one of the above embodiments.

The method for retrieving location data 5 of an object 4 over time, the method for retrieving location data 5 of an object 4 over time from a signals-in-space receiver 2, the signals-in-space receiver 2, the reader 6 for retrieving location data 5 of an object 4 over time, the method for storing location data 5 of an object 4 over time in a signals-in-space receiver 2, the system 1 for retrieving location data 5 of an object 4 over time are not limited to the described embodiments. Any combination of the described embodiments is possible and foreseen.

In particular a receiver 2 and/or reader 6 described in one embodiment can be applied in another embodiment with corresponding advantages.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriate detailed structure. Further, the terms and phrases used herein are not intended to be limiting, but rather, to provide an understandable description of the invention.

The terms "a" or "an", as used herein, are defined as one or more than one. The term "multiple", as used herein, is defined as two or more than two. The term "another", as used herein, is defined as at least a second or more. The terms "including" and/or "having", as used herein, are defined as comprising (i.e. open language, not excluding other elements or steps). Any reference signs in the claims should not be construed as limiting the scope of the claims of the invention.

The mere fact that certain measures are recited in mutually different dependent claims does not indicate that a combination of these measures cannot be used to advantage.

Summarized, a method according to the invention and use of a reader and receiver according to the invention are acquired that result in less tampering and/or spoofing of location data. By separating the storing of encrypted navigation data and decrypting the encrypted navigation data to retrieve the location data in terms of steps and where these steps are performed, result in a great reduction of tamper/spoof risks.

The invention is not limited to the described embodiments.

Location data comprises position, velocity and time.

The receiver is free from a security module, i.e. a decryption unit for decrypting the encrypted navigation signal.

In an embodiment, the memory unit is an internal memory, e.g. a SSD or SD card.

The reader is configured for decrypting the encrypted navigation data and retrieve location data, such as position, velocity and time, per time stamp.

The reader may further be configured for streaming the location data, preferably per time stamp, directly onto a digital map or into a data file.

In a further embodiment, the method further comprises the step of comparing the retrieved location data with non-encrypted navigation data. This non-encrypted navigation data is acquired by receiving non-encrypted navigations signals by the antenna and discretizing these non-encrypted navigation signals by the A/D converter into non-encrypted navigation data. For example, the non-encrypted navigation data is civil GPS or Galileo OS.

The method further may comprise the step of attaching the receiver to an object by means of magnets.

The method may further comprise the step of providing power to the receiver attached to the object from a power source within the object.

## Claims

1. Method for reducing a risk of tampering and/or spoofing of location data (5) of an object (4) over time, the method comprising the steps of:
- providing a signals-in-space receiver (2) to the object (4), the signals-in-space receiver (2) comprising an antenna (8) for receiving an encrypted navigation signal (10a, 10b, 10c, 10d), an A/D converter (15) for discretizing the encrypted navigation signal (10a, 10b, 10c, 10d) into encrypted navigation data (12), a memory unit (16) for storing the encrypted navigation data (12) and an interface (7) for connecting a reader (6) to the memory unit (16), wherein a decryption key for decrypting the encrypted navigation data (12) is not provided in the signals-in-space receiver (2);
- receiving the encrypted navigation signal (10a, 10b, 10c, 10d) over time by the signals-in-space receiver (2) through its antenna (8);
- discretizing the encrypted navigation signal (10a, 10b, 10c, 10d) over time by the A/D converter (15) into encrypted navigation data (12);
- storing the encrypted navigation data (12) over time in the memory unit (16);
- connecting the reader (6) with the memory unit (16) of the signals-in-space receiver (2);
- transferring the encrypted navigation data (12) over time from the memory unit (16) to the reader (6);
- decrypting in the reader (6) the encrypted navigation data (12) over time and retrieving the location data (5) of the object (4) over time,
**characterized by**
- checking from the retrieved location data (5) over time where the object (4) has been.

2. Method according to the preceding claim, wherein the antenna (8) is suitable for receiving more than one, preferably more than three encrypted navigation signals (10a, 10b, 10c, 10d) at the same time, wherein the A/D converter (15) is suitable for discretizing the received encrypted navigation signals (10a, 10b, 10c, 10d) at the same time into encrypted navigation data (12) and the method comprises the steps of:
- receiving the encrypted navigation signals (10a, 10b, 10c, 10d) over time by the antenna (8);
- discretizing the encrypted navigation signals (10a, 10b, 10c, 10d) over time by the A/D converter (15).

3. Method according to one of the preceding claims, wherein the method further comprises the step of providing the reader (6) with a decryption key for decrypting the encrypted navigation data (12) over time.

4. Method according to one of the preceding claims, wherein the method further comprises the step of comparing the location data (5) of the object (4) over time with a predefined region.

5. Method according to one of the preceding claims, wherein the method further comprises the step of comparing the retrieved location data with non-encrypted navigation data.

6. Method according to one of the preceding claims, wherein the encrypted navigation signal (10a, 10b, 10c, 10d) is an encrypted Global Navigation Satellite System (GNSS) signal.

7. Method according to one of the preceding claims, wherein the object (4) is:
- a vessel, in particular the object (4) is a fishing ship, or
- a container, in particular on a vessel or on a road truck, or
- a vehicle, or
- a human body.

8. Method according to one of the preceding claims, wherein the encrypted navigation signal (10a, 10b, 10c, 10d) is a Public Regulated Service (PRS) signal and/or a Commercial Navigation Service (CNS) signal.

9. Method according to any of the preceding claims, wherein the signals-in-space receiver (2) further comprises a power supply interface for connecting with an external power supply, the method further comprising the step of providing power from the external power supply to the signals-in-space receiver (2), the external power supply being external to the signals-in-space receiver (2).

10. Use of a signals-in-space receiver (2) in the method according to any of claims 1-9, the signals-in-space-receiver (2) comprising an antenna (8) for receiving an encrypted navigation signal (10a, 10b, 10c, 10d), an A/D converter (15) for discretizing the encrypted navigation signal (10a, 10b, 10c, 10d) into encrypted navigation data (12), a memory unit (16) for storing the encrypted navigation data (12), and an interface (7) for connecting a reader (6) to the memory unit (16), wherein a decryption key for decrypting the encrypted navigation data (12) is not provided in the signals-in-space receiver (2).

11. Use of a reader (6) in the method according to any of claims 1-9, the reader (6) comprising a receiver interface (27) for connection with a memory unit (16) of a signals-in-space receiver (2) and transferring encrypted navigation data (12) over time stored in the memory unit (16) to the reader (6), a decryption unit for decrypting the encrypted navigation data (12) over time into decrypted navigation data (22), and a retrieving unit (23) for retrieving location data (5) of the object (4) over time from the decrypted navigation data.

## Patentansprüche

1. Verfahren zum Verringern von einem Risiko für das Manipulieren und/oder Spoofing von Standortdaten (5) eines Objekts (4) über die Zeit, wobei das Verfahren die folgenden Schritte umfasst:
- Bereitstellen von einem Signale-im-Raum-Empfänger (2) zu dem Objekt (4), wobei der Signale-im-Raum-Empfänger (2) eine Antenne (8) zum Empfangen von einem verschlüsselten Navigationssignal (10a, 10b, 10c, 10d), einen A/D-Wandler (15) zum Diskretisieren des verschlüsselten Navigationssignals (10a, 10b, 10c, 10d) in verschlüsselte Navigationsdaten (12), eine Speichereinheit (16) zum Speichern der verschlüsselten Navigationsdaten (12) und eine Schnittstelle (7) zum Verbinden von einem Lesegerät (6) mit der Speichereinheit (16) umfasst, wobei in dem Signale-im-Raum-Empfänger (2) kein Entschlüsselungsschlüssel zum Entschlüsseln der verschlüsselten Navigationsdaten (12) bereitgestellt ist;
- Empfangen von dem verschlüsselten Navigationssignal (10a, 10b, 10c, 10d) über die Zeit durch den Signale-im-Raum-Empfänger (2) mittels seiner Antenne (8);
- Diskretisieren von dem verschlüsselten Navigationssignal (10a, 10b, 10c, 10d) über die Zeit durch den A/D-Wandler (15) in verschlüsselte Navigationsdaten (12);
- Speichern der verschlüsselten Navigationsdaten (12) über die Zeit in der Speichereinheit (16);
- Verbinden von dem Lesegerät (6) mit der Speichereinheit (16) von dem Signale-im-Raum-Empfänger (2);
- Übertragen von den verschlüsselten Navigationsdaten (12) über die Zeit von der Speichereinheit (16) zu dem Lesegerät (6);
- Entschlüsseln in dem Lesegerät (6) von den verschlüsselten Navigationsdaten (12) über die Zeit und Abrufen der Standortdaten (5) des Objekts (4) über die Zeit,
und **gekennzeichnet ist durch** das
- Überprüfen aus den abgerufenen Standortdaten (5) über die Zeit, wo das Objekt (4) gewesen ist.

2. Verfahren nach dem vorhergehenden Anspruch, wobei die Antenne (8) zum gleichzeitigen Abrufen von mehr als einem, vorzugsweise mehr als drei verschlüsselten Navigationssignalen (10a, 10b, 10c, 10d) geeignet ist, wobei der A/D-Wandler (15) zum gleichzeitigen Diskretisieren der empfangenen verschlüsselten Navigationssignale (10a, 10b, 10c, 10d) in verschlüsselte Navigationsdaten (12) geeignet ist und das Verfahren die folgenden Schritte umfasst:
- Empfangen der verschlüsselten Navigationssignale (10a, 10b, 10c, 10d) über die Zeit durch die Antenne (8);
- Diskretisieren der verschlüsselten Navigationssignale (10a, 10b, 10c, 10d) über die Zeit durch den A/D-Wandler (15).

3. Verfahren nach einem der vorhergehenden Ansprüche, wobei das Verfahren ferner den Schritt des Ausstattens von dem Lesegerät (6) mit einem Entschlüsselungsschlüssel zum Entschlüsseln der verschlüsselten Navigationsdaten (12) über die Zeit umfasst.

4. Verfahren nach einem der vorhergehenden Ansprüche, wobei das Verfahren ferner den Schritt des Vergleichens von den Standortdaten (5) des Objekts (4) über die Zeit mit einer vordefinierten Region umfasst.

5. Verfahren nach einem der vorhergehenden Ansprüche, wobei das Verfahren ferner den Schritt des Vergleichens der abgerufenen Standortdaten mit unverschlüsselten Navigationsdaten umfasst.

6. Verfahren nach einem der vorhergehenden Ansprüche, wobei das verschlüsselte Navigationssignal (10a, 10b, 10c, 10d) ein verschlüsseltes Global Navigation Satellite System (GNSS)-Signal ist.

7. Verfahren nach einem der vorhergehenden Ansprüche, wobei das Objekt (4) das Folgende ist:
- ein Schiff, insbesondere ist das Objekt (4) ein Fischerboot, oder
- ein Container, insbesondere auf einem Schiff oder einem Lastwagen, oder
- ein Fahrzeug, oder
- ein menschlicher Körper.

8. Verfahren nach einem der vorhergehenden Ansprüche, wobei das verschlüsselte Navigationssignal (10a, 10b, 10c, 10d) ein Public Regulated Service (PRS)-Signal und/oder einen Commercial Navigation Service (CNS)-Signal ist.

9. Verfahren nach einem oder mehreren der vorhergehenden Ansprüche, wobei der Signale-im-Raum-Empfänger (2) ferner eine Energieversorgungschnittstelle zum Verbinden mit einer externen Energieversorgung umfasst, wobei das Verfahren ferner den Schritt des Bereitstellens von Energie aus der externen Energieversorgung zu dem Signale-im-Raum-Empfänger (2) umfasst, wobei die externe Energieversorgung zu dem Signale-im-Raum-Empfänger (2) extern ist.

10. Verwendung von einem Signale-im-Raum-Empfänger (2) in dem Verfahren nach einem oder mehreren der Ansprüche 1-9, wobei der Signale-im-Raum-Empfänger (2) eine Antenne (8) zum Empfangen von einem verschlüsselten Navigationssignal (10a, 10b, 10c, 10d), einen A/D-Wandler (15) zum Diskretisieren des verschlüsselten Navigationssignals (10a, 10b, 10c, 10d) in verschlüsselte Navigationsdaten (12), eine Speichereinheit (16) zum Speichern der verschlüsselten Navigationsdaten (12) und eine Schnittstelle (7) zum Verbinden von einem Lesegerät (6) mit der Speichereinheit (16) umfasst, wobei in dem Signale-im-Raum-Empfänger (2) kein Entschlüsselungsschlüssel zum Entschlüsseln der verschlüsselten Navigationsdaten (12) bereitgestellt ist.

11. Verwendung von einem Lesegerät (6) in dem Verfahren nach einem oder mehreren der Ansprüche 1-9, wobei das Lesegerät (6) eine Empfängerschnittstelle (27) zum Verbinden mit einer Speichereinheit (16) eines Signale-im-Raum-Empfängers (2) und zum Übertragen von verschlüsselten Navigations-daten (12) über die Zeit, die in der Speichereinheit (16) gespeichert sind, zu dem Lesegerät (6), eine Entschlüsselungseinheit zum Entschlüsseln der verschlüsselten Navigationsdaten (12) über die Zeit in entschlüsselte Navigationsdaten (22) und eine Abrufeinheit (23) zum Abrufen der Standortdaten (5) des Objekts (4) über die Zeit aus den entschlüsselten Navigationsdaten umfasst.

## Revendications

1. Procédé de réduction d'un risque de falsification et/ou d'usurpation de données de localisation (5) d'un objet (4) dans le temps, le procédé comprenant les étapes consistant à :
- produire un récepteur de signaux spatiaux (2) à l'objet (4), le récepteur de signaux spatiaux (2) comprenant une antenne (8) destinée à recevoir un signal de navigation crypté (10a, 10b, 10c, 10d), un convertisseur A/N (15) destiné à discrétiser le signal de navigation crypté (10a, 10b, 10c, 10d) en données de navigation cryptées (12), une unité de mémoire (16) destinée à stocker les données de navigation cryptées (12) et une interface (7) destinée à connecter un lecteur (6) à l'unité de mémoire (16), dans lequel une clé de décryptage destinée à décrypter les données de navigation cryptées (12) n'est pas prévue dans le récepteur de signaux spatiaux (2) ;
- recevoir le signal de navigation crypté (10a, 10b, 10c, 10d) dans le temps au moyen du récepteur de signaux spatiaux (2) par le biais de son antenne (8) ;
- discrétiser le signal de navigation crypté (10a, 10b, 10c, 10d) dans le temps au moyen du convertisseur A/N (15) en données de navigation cryptées (12) ;
- mémoriser les données de navigation cryptées (12) dans le temps dans l'unité de mémoire (16) ;
- connecter le lecteur (6) à l'unité de mémoire (16) du récepteur de signaux spatiaux (2) ;
- transférer les données de navigation cryptées (12) dans le temps de l'unité de mémoire (16) au lecteur (6) ;
- décrypter dans le lecteur (6) les données de navigation cryptées (12) dans le temps et récupérer les données de localisation (5) de l'objet (4) dans le temps,
**caractérisé par** l'étape consistant à
- vérifier à partir des données de localisation récupérées (5) dans le temps l'endroit où se trouve l'objet (4).

2. Procédé selon la revendication précédente, dans lequel l'antenne (8) est adaptée pour recevoir plus d'un signal de navigation crypté, de préférence plus de trois signaux de navigation cryptés (10a, 10b, 10c, 10d) en même temps et dans lequel le convertisseur A/N (15) est adapté pour discrétiser les signaux de navigation cryptés reçus (10a, 10b, 10c, 10d) en même temps en données de navigation cryptés (12), le procédé comprenant les étapes consistant à :
- recevoir les signaux de navigation cryptés (10a, 10b, 10c, 10d) dans le temps au moyen de l'antenne (8) ;
- discrétiser les signaux de navigation cryptés (10a, 10b, 10c, 10d) dans le temps au moyen du convertisseur A/N (15).

3. Procédé selon l'une des revendications précédentes, le procédé comprenant en outre l'étape consistant à pourvoir le lecteur (6) d'une clé de décryptage pour décrypter les données de navigation cryptées (12) dans le temps.

4. Procédé selon l'une des revendications précédentes, le procédé comprenant en outre l'étape consistant à comparer les données de localisation (5) de l'objet (4) dans le temps avec une région prédéfinie.

5. Procédé selon l'une des revendications précédentes, le procédé comprenant en outre l'étape consistant à comparer les données de localisation récupérées avec des données de navigation non cryptées.

6. Procédé selon l'une des revendications précédentes, dans lequel le signal de navigation crypté (10a, 10b, 10c, 10d) est un signal crypté du système globale de navigation par satellite (GNSS).

7. Procédé selon l'une des revendications précédentes, dans lequel l'objet (4) est :
- un navire, en particulier l'objet (4) est un navire de pêche, ou
- un conteneur, en particulier sur un navire ou sur un camion, ou
- un véhicule, ou
- un corps humain.

8. Procédé selon l'une des revendications précédentes, dans lequel le signal de navigation crypté (10a, 10b, 10c, 10d) est un signal de service public réglementé (PRS) et/ou un signal de service de navigation commerciale (CNS).

9. Procédé selon l'une quelconque des revendications précédentes, dans lequel le récepteur de signaux spatiaux (2) comprend en outre une interface d'alimentation destinée à être reliée à une alimentation externe, le procédé comprenant en outre l'étape consistant à fournir de l'énergie, provenant de l'alimentation externe, au récepteur de signaux spatiaux (2), l'alimentation externe étant extérieure au récepteur de signaux spatiaux (2).

10. Utilisation d'un récepteur de signaux spatiaux (2) dans le procédé selon l'une quelconque des revendications 1 à 9, le récepteur de signaux spatiaux (2) comprenant une antenne (8) destinée à recevoir un signal de navigation crypté (10a, 10b, 10c, 10d), un convertisseur A/N (15) destiné à discrétiser le signal de navigation crypté (10a, 10b, 10c, 10d) en données de navigation cryptées (12), une unité de mémoire (16) destinée à mémoriser les données de navigation cryptées (12), et une interface (7) destinée à relier un lecteur (6) à l'unité de mémoire (16), une clé de décryptage destinée à décrypter les données de navigation cryptées (12) n'étant pas prévue dans le récepteur de signaux spatiaux (2).

11. Utilisation d'un lecteur (6) dans le procédé selon l'une quelconque des revendications 1 à 9, le lecteur (6) comprenant une interface de récepteur (27) destinée à être reliée à une unité de mémoire (16) d'un récepteur de signaux spatiaux (2) et à transférer des données de navigation cryptées (12) dans le temps, mémorisées dans l'unité de mémoire (16) au lecteur (6), une unité de décryptage destinée à décrypter les données de navigation cryptées (12) en données de navigation décryptées (22) et une unité de récupération (23) destinée à récupérer des données de localisation (5) de l'objet (4) dans le temps à partir des données de navigation décryptées.
